# EUROPÄISCHE PATENTSCHRIFT

(11) **EP 2 849 142 B1**
(45) Veröffentlichungstag und Bekanntmachung des Hinweises auf die Patenterteilung: **28.10.2020**
(21) Anmeldenummer: 13184000.1
(22) Anmeldetag: 11.09.2013
(51) Int. Cl.: G06Q 30/06

(54) **Smartphone gestützte Wartung eines Selbstbedienungsterminals**
Smartphone-assisted maintenance of a self-service terminal
Maintenance assistée par smartphone d'un terminal en libre-service

(43) Veröffentlichungstag der Anmeldung: 18.03.2015
(73) Patentinhaber: Wincor Nixdorf International GmbH, 33106 Paderborn (DE)
(72) Erfinder: Dr. Graw, Bernd, 33106 Paderborn (DE)

(56) Entgegenhaltungen:
- EP-A1- 1 798 620
- DE-A1-102009 040 928
- US-A1- 2012 118 947

## Beschreibung

Die vorliegende Erfindung betrifft ein Verfahren zum Warten eines Selbstbedienungsterminals nach dem Oberbegriff des Patentanspruchs 1 sowie ein System zum Warten eines Selbstbedienungsterminals nach dem Oberbegriff des Patentanspruchs 12.

Ein Verfahren zum Warten eines Selbstbedienungsterminals ist beispielsweise aus der DE 10 2009 040928 A1 bekannt. Das dort zu wartende Selbstbedienungsterminal ist nicht direkt an ein externes Netz oder an weitere Geräte angeschlossen. Um zu erreichen, dass auch ohne einen direkten Anschluss des Selbstbedienungsterminals Wartungs- und Diagnosedaten direkt zwischen dem Selbstbedienungsterminal und einer Datenzentrale übertragen werden können, werden wartungssensitive Daten in einem Nahbereich des Selbstbedienungsterminals insbesondere unter Verwendung einer mobilen Kamera in einer stromlosen und funkfreien Datenübertragungsform übertragen. Dabei werden auf den zu wartenden Komponenten des Selbstbedienungsterminals Barcodes angebracht, die von der mobilen Kamera eingelesen werden. Als Kamera kann aber auch eine ohnehin bereits eingesetzte Überwachungskamera dienen. Die DE 10 2009 040928 A1 lehrt, ein Selbstbedienungsterminal mittels einer optischen und/oder akustischen Datenübertragungsverbindung an eine Datenzentrale zu koppeln, anstelle des Selbstbedienungsterminal direkt, beispielsweise über ein Kabel, an die Datenzentrale zu koppeln.

Aufgabe der vorliegenden Erfindung ist es, eine technische Lehre vorzuschlagen, gemäß der die Wartung eines Selbstbedienungsterminals durch einen Service-Techniker erleichtert wird.

Gelöst wird diese Aufgabe durch ein Verfahren zum Warten eines Selbstbedienungsterminals mit den Merkmalen des unabhängigen Anspruchs 1 sowie durch ein System zum Warten eines Selbstbedienungsterminals mit den Merkmalen des unabhängigen Patentanspruchs 11. Merkmale vorteilhafter Weiterbildungen der vorliegenden Erfindung sind in den Unteransprüchen angegeben.

Das erfindungsgemäße Verfahren sowie das erfindungsgemäße System erlauben einen einfacheren und fehlertoleranteren Wartungsablauf bei einem Selbstbedienungsterminal. Der gesamte Wartungsablauf kann von dem Server aus koordiniert werden, ohne das Komponenten des Selbstbedienungsterminals oder das mobile Endgerät mit einer besonderen Intelligenz ausgestattet werden müssen. Erfindungsgemäß greifen dabei mindestens drei Anwendungen ineinander, nämlich die Serveranwendung zum Verwalten des zu wartenden Selbstbedienungsterminals, die Endgerätanwendung auf dem mobilen Endgerät eines Service-Technikers sowie die Wartungsanwendung, die auf dem zu wartenden Selbstbedienungsterminal ausgeführt wird. Dadurch, dass der Server sowohl das Selbstbedienungsterminal als auch die gewartete Komponente des Selbstbedienungsterminal eindeutig anhand der von dem mobilen Endgerät an den Server übermittelten Kennzeichnungsdaten und Stehbilddaten identifizieren kann, ist eine vollständige Koordinierung des Wartungsprozesses durch die Serveranwendung möglich. Dabei dient der Server als zentrale Informationsquelle, die Wartungsanwendung zum Steuern der (gewarteten) Komponenten des Selbstbedienungsterminals und die Endgerätanwendung zum Anleiten des Service-Technikers und zum Erzeugen von Stehbildern und Erfassen der Kennzeichnung des zu wartenden Selbstbedienungsterminals. Insbesondere ist es mit der vorliegenden Erfindung möglich, dass Selbstbedienungsterminals von unterschiedlichen Herstellern in einfacher und zuverlässiger Weise gewartet werden können, wobei sämtliche Wartungsprozesse zentral vom Server aus koordiniert werden können.

Das Warten eines Selbstbedienungsterminals umfasst beispielsweise das Austauschen einer Geldkassette bei einem Geldautomaten. Hier erlaubt die Erfindung ein sogenanntes Cash Cycle Management in einem Multi-Vendor-Umfeld ohne den Einsatz von intelligenten Geldkassetten. Es kann also eine Vielzahl von Geldautomaten unterschiedlicher Hersteller ("Multi-Vendor") zentral vom Server aus verwaltet werden, ohne dass die Geldkassetten mit logischen Speichern und/oder Logikeinheiten ausgestattet werden müssen. Erforderlich ist lediglich, dass die Geldkassetten identifizierbar sind. Anhand der Identifikation ermittelt der Server relevante Daten der Geldkassette und lässt diese dem Geldautomaten in Gestalt der Aktualisierungsdaten zukommen. Damit ist das erfindungsgemäße zuverlässiger, da beispielsweise vermieden wird, dass durch einen Service-Techniker manuell falsche Aktualisierungsdaten eingegeben werden.

Nachfolgend sollen das erfindungsgemäße Verfahren und das erfindungsgemäße System zum Warten eines Selbstbedienungsterminals (im Folgenden auch kurz als ,SB-Terminal' bezeichnet) erläutert werden.

Unter dem Begriff der Wartung sind vorliegend sämtliche Maßnahmen zu verstehen, die den kontinuierlichen Betrieb des Selbstbedienungsterminals dienen. Beispielsweise kann die Wartung eines SB-Terminals den Austausch und/oder die Reparatur einer Komponente oder eines Moduls des SB-Terminals beinhalten.

Bei dem Selbstbedienungsterminal kann es sich beispielsweise um einen Geldautomaten, ein Checkout-Terminal, ein Ticketverkaufsautomat, ein Warenverkaufsautomat oder ähnliches handeln. Das Warten eines Selbstbedienungsterminals kann insbesondere durch Austausch einer Geldkassette bei einem Geldautomaten erfolgen.

Zum Verwalten einer Anzahl von Selbstbedienungsterminals wird auf dem Server eines Netzwerks die Serveranwendung ausgeführt. Der Server des Netzwerks fungiert als Daten- und Steuerungszentrale. Der Server ist bevorzugt mit dem Internet verbunden bzw. bildet einen Teil des Internets. Auf dem Server wird die Serveranwendung, also beispielsweise eine bestimmte Verwaltungs- und/oder Steuerungssoftware, ausgeführt. Mittels der Serveranwendung kann ein bestimmtes Selbstbedienungsterminal, das an den Server über das Netzwerk, wie dem Internet, gekoppelt ist, kontaktiert werden und mit diesem eine operative Kopplung hergestellt werden. Es ist möglich, dass sich der Server und das Selbstbedienungsterminal weit voneinander entfernt befinden, wie beispielsweise einige Kilometer.

Zum Warten des Selbstbedienungsterminals, also beispielsweise zum Austausch einer Geldkassette bei einem Geldautomaten, begibt sich zunächst ein Service-Techniker in einen Nahbereich des Selbstbedienungsterminals und positioniert in diesem Nahbereich ein mitgeführtes mobiles Endgerät. Unter einem Nahbereich soll vorliegend ein Bereich verstanden werden, der nicht weiter als einige Meter von Selbstbedienungsterminal entfernt ist. Auf dem mobilen Endgerät wird dann eine Endgerätanwendung zum Warten des Selbstbedienungsterminals ausgeführt. Bei dem mobilen Endgerät kann es sich beispielsweise um einen tragbaren Computer, ein Smartphone, ein PDA (Personal Digital Assistant), ein Mobiltelefon, ein Tablet oder dergleichen handeln. Die Endgerätanwendung liegt beispielsweise in Gestalt einer sogenannten App vor, die auf dem mobilen Endgerät ausgeführt werden kann. Bei der Endgerätanwendung kann es sich somit beispielsweise um eine Smartphone-App handeln.

Zum Warten des Selbstbedienungsterminals muss das Selbstbedienungsterminal zunächst identifiziert werden. Dazu wird eine Kennzeichnung des Selbstbedienungsterminals erfasst und in Abhängigkeit von der Kennzeichnung werden Kennzeichnungsdaten erzeugt. Bevorzugt geschieht dies durch das mobile Endgerät. Beispielsweise umfasst die Kennzeichnung des Selbstbedienungsterminals ein Signalisierungs-Tag, wie ein Near Field Communication (NFC) Tag, ein Radio Frequency Identification (RFID) Tag, ein Barcode und/oder Quick Response (QR) Code. Das mobile Endgerät ist beispielsweise ausgebildet, diese Kennzeichnung zu lesen und zu interpretieren und entsprechende Kennzeichnungsdaten an den Server zu übermitteln. Es ist auch möglich, dass das mobile Endgerät ein Stehbild von einem bestimmten Teil des Selbstbedienungsterminals erzeugt und dieses Stehbild, ohne es zu analysieren, an den Server übermittelt, so dass der Server basierend auf dem Stehbild selbst ein Identifizieren des Selbstbedienungsterminals vornehmen kann. Alternativ ist es auch möglich, dass der Service-Techniker am Selbstbedienungsterminal einen bestimmten Befehl eingibt, der das Selbstbedienungsterminal veranlasst, Kennzeichnungsdaten an den Server zu übermitteln, anhand derer der Server das Selbstbedienungsterminal identifizieren kann.

Zwischen dem Server und dem mobilen Endgerät wird eine Kommunikationsverbindung hergestellt, sodass die Serveranwendung und die Endgerätanwendung miteinander kommunizieren können und Daten, wie Steuerungsnachrichten, miteinander austauschen können. Die Kommunikationsverbindung kann beispielsweise über ein zellulares Mobilfunknetz erfolgen, wie beispielsweise ein Wireless Local Area Network (WLAN) Netz, Global System for Mobile Communications (GSM) Netz, General Packet Radio Service (GPRS) Netz, Second/Third Generation Partnership Project (2GPP/3GPP) Netz, und/oder ein Long Term Evolution (LTE) Netz.

Nachdem die Kennzeichnungsdaten an die Serveranwendung übermittelt worden sind und die Serveranwendung das zu wartende Selbstbedienungsterminal anhand der Kennzeichnungsdaten identifiziert hat, initiiert die Serveranwendung ein Ausführen einer Wartungsanwendung auf dem Selbstbedienungsterminal. Auf dem Server ist also bevorzugt eine Datenbank hinterlegt, in der den Kennzeichnungsdaten Netzwerkadressen von Selbstbedienungsterminals zugeordnet sind. So kann der Server bzw. die Serveranwendung nach Erhalt der Kennzeichnungsdaten das zu wartende SB-Terminal über das Netzwerk "ansprechen" und mit diesem eine Netzwerkverbindung aufbauen, über die das SB-Terminal und der Server bzw. die jeweiligen Anwendungen miteinander kommunizieren können.

Bei der Wartungsanwendung kann es sich um ein Steuerungsprogramm handeln, das den Ablauf der Wartung koordiniert und gewartete Komponenten des Selbstbedienungsterminals initiiert, registriert und dergleichen. Darüber hinaus kann die Wartungsanwendung das Darstellen von Anweisungen auf einen Bildschirm des Selbstbedienungsterminals umfassen. Das Selbstbedienungsterminal geht durch das Initiieren der Wartungsanwendung von einem Normalbetriebsmodus in einem Wartungsmodus über. Dieser Wartungsmodus erlaubt es, einzelne Komponenten des Selbstbedienungsterminals zu warten, also beispielsweise zu reparieren und/oder auszutauschen. Jedenfalls wird eine Netzwerkverbindung zwischen dem Selbstbedienungsterminal und dem Server hergestellt, über welche die Serveranwendung mit der Wartungsanwendung kommunizieren kann.

Nachdem die Wartungsanwendung auf dem Selbstbedienungsterminal initiiert worden ist, die Endgerätanwendung auf dem mobilen Endgerät ausgeführt wird und die Kommunikationsverbindung und die Netzwerkverbindung hergestellt worden sind, kann ein Service-Techniker, instruiert durch bestimmte Anweisungen, die ihm auf dem mobilen Endgerät durch die Endgerätanwendung angezeigt werden, Wartungsarbeiten am Selbstbedienungsterminal durchführen, wie beispielsweise eine Geldkassette bei einem Geldautomaten austauschen.

Nach Abschluss der Wartungsarbeiten an dem Selbstbedienungsterminal, was der Serveranwendung beispielsweise durch Übermitteln einer entsprechenden Nachricht durch die Endgerätanwendung mitgeteilt wird, bestimmt die Serveranwendung Schemainformationsdaten in Abhängigkeit der Kennzeichnungsdaten und übermittelt die bestimmten Schemainformationsdaten an die Endgeräteanwendung über die Kommunikationsverbindung. Bevorzugt ist also auf dem Server eine zweite Datenbank hinterlegt, die den Kennzeichnungsdaten Schemainformationsdaten zuordnet und auf die die Serveranwendung Zugriff hat.

Die Schemainformationsdaten sind indikativ für eine Komponente des Selbstbedienungsterminals, die wenigstens teilweise durch eine Stehbilderzeugungsvorrichtung des mobilen Endgeräts zu erfassen ist. Die Schemainformationsdaten geben also an, welche Komponente oder welcher Teil einer Komponente des Selbstbedienungsterminals durch das mobile Endgerät optisch zu erfassen ist. Das mobile Endgerät umfasst dazu die Stehbilderzeugungsrichtung, wie beispielsweise eine übliche Kameraeinheit, die üblicherweise in ein mobiles Endgerät, wie ein Smartphone, oder Tablet, oder ein PDA eingebaut ist, oder einen Scanner, um ein Stehbild von der Komponente bzw. dem Teil der Komponente des Selbstbedienungsterminals zu erfassen. Die Schemainformationsdaten können insbesondere auch indikativ für eine zweite Kennzeichnung sein, die an der Komponente angebracht ist, wie ein zweiter QR-Code. Dies soll weiter unten näher beschrieben werden.

Auf den Empfang der Schemainformationsdaten hin zeigt das mobile Endgerät auf einem Anzeigemittel, wie ein übliches Display, Schemainformationen basierend auf den Schemainformationsdaten an. Beispielsweise visualisiert die Endgerätanwendung auf dem Anzeigemittel des mobilen Endgeräts anhand der Schemainformationsdaten, welcher Teil des Selbstbedienungsterminals mittels der Stehbilderzeugungsvorrichtung zu erfassen ist. Dadurch, dass der Server das Selbstbedienungsterminal identifiziert hat, ist der Server auch ausgebildet, Daten, die beispielsweise indikativ für die Form und Abmessungen des Selbstbedienungsterminals sind, zu beschaffen und so beispielsweise Schemainformationsdaten zu generieren, anhand derer die Form des SB-Terminals wenigstens teilweise auf dem Anzeigemittel des mobilen Endgeräts angezeigt werden kann, beispielsweise durch eine Strichzeichnung, aus der hervorgeht, welcher Teil des Selbstbedienungsterminals, also welche Komponente bzw. welcher Teil einer Komponente, durch die Stehbilderzeugungsvorrichtung des mobilen Endgeräts zu erfassen ist. Beispielsweise fordert die Endgerätanwendung anhand der Schemainformationen den Service-Techniker auf, ein Stehbild eines Teils des Selbstbedienungsterminals zu erzeugen, das alle mit den Schemainformationen abgebildeten Komponenten enthält. Die Endgerätanwendung veranlasst sodann ein Übermitteln des Stehbilds bzw. von Stehbildern, die indikativ für das Stehbild sind, an die Serveranwendung durch das mobile Endgerät.

Die Serveranwendung wertet die Stehbilddaten aus und erzeugt in Abhängigkeit der Auswertung der Stehbilddaten Aktualisierungsdaten und ermittelt diese Aktualisierungsdaten an die Wartungsanwendung, die auf dem Selbstbedienungsterminal ausgeführt wird. Beispielsweise identifiziert die Serveranwendung anhand der Stehbilddaten die gewarteten Komponenten, also beispielsweise ausgetauschte Komponenten sowie weitere Eigenschaften betreffend diese Komponenten, beispielsweise einen Zählerstand, Daten, die indikativ für den Inhalt einer installierten Geldkassette sind, oder ähnliches, und überträgt diese Aktualisierungsdaten an die Wartungsanwendung. Auf den Empfang dieser Aktualisierungsdaten hin kann die Wartungsanwendung beispielsweise Zählerinformationen entsprechend der Aktualisierungsdaten setzen und diesen Vorgang an den Server bzw. an die Serveranwendung kommunizieren. Die Serveranwendung kann optional sodann der Endgeräteanwendung eine Nachricht übermitteln, die indikativ für den erfolgreichen Abschluss des Wartungsvorgangs ist.

Nachfolgend werden weitere Ausführungsformen des erfindungsgemäßen Verfahrens zum Warten eines Selbstbedienungsterminals beschrieben. Die zusätzlichen Merkmale dieser weiteren Ausführungsformen können zur Bildung weiterer Ausführungsbeispiele miteinander kombiniert werden, sofern sie nicht ausdrücklich als alternativ zueinander beschrieben worden sind. Ferner können auch oben bereits beschriebenen optionalen Merkmale des erfindungsgemäßen Verfahrens mit den nachfolgend beschriebenen Merkmalen zur Bildung weiterer Ausführungsformen kombiniert werden.

Die auf dem Server ausgeführte Serveranwendung steuert sowohl die Wartungsanwendung auf dem Selbstbedienungsterminal als auch die Endgeräteanwendung auf dem mobilen Endgerät. Dies hat den Vorteil, dass der gesamte Wartungsprozess zentral durch den Server gesteuert und koordiniert werden kann. Die Serveranwendung registriert also bevorzugt Anwendungszustände sowohl der Wartungsanwendung als auch der Endgeräteanwendung. Dies hat den weiteren Vorteil, dass eine direkte Kommunikation zwischen dem Selbstbedienungsterminal und dem mobilen Endgerät nicht stattfinden muss. Dies wirkt sich positiv auf die Komponenten des Selbstbedienungsterminals aus, da diese nicht mit einer für eine solche Kommunikation notwendige Intelligenz ausgestattet werden müssen. Sowohl das Selbstbedienungsterminal als auch die zu wartende Komponente des Selbstbedienungsterminals müssen lediglich mit Mitteln versehen sein, die eine eindeutige Identifizierung sowohl des Selbstbedienungsterminals als auch der zu wartenden Komponente ermöglicht. Es ist aber nicht notwendig, dass die Komponenten des SB-Terminals mit dem mobilen Endgerät kommuniziert. Insoweit braucht auch das mobile Endgerät nicht ausgestaltet zu sein, Steuerungsinformationen an das Selbstbedienungsterminal oder an die zu wartende Komponente des Selbstbedienungsterminals zu übermitteln. Bei dem Endgerät kann es sich also um ein handelsübliches Smartphone oder dergleichen handeln. Zur Koordination des Wartungsprozesses sind demnach lediglich zwei ohnehin bestehende bzw. leicht herzustellende Verbindungen notwendig, nämlich die Netzwerkverbindung zwischen dem Server und dem Selbstbedienungsterminal einerseits und die Kommunikationsverbindung zwischen dem Server und dem mobilen Endgerät andererseits. Zur Wartung des SB-Terminals ist es nicht erforderlich, dass das mobile Endgerät mit dem SB-Terminal kommuniziert.

Wie bereits oben erläutert, erfolgt das Erfassen der Kennzeichnung und das Übermitteln der Kennzeichnungsdaten bevorzugt durch das mobile Endgerät selbst. Dies kann beispielsweise dadurch geschehen, dass das mobile Endgerät die Kennzeichnung des Selbstbedienungsterminals, welche bevorzugt ein Signalisierungs-Tag, wie ein Near Field Communication (NFC) Tag, ein Radio Frequency Identification (RFID) Tag, ein Barcode und/oder Quick Response (QR) Code, umfasst, erfasst. Dazu umfasst das mobile Endgerät bevorzugt entsprechende Mittel. Zum Erfassen eines Barcodes und/oder eines QR-Codes ist beispielsweise eine herkömmliche Stehbilderzeugungsvorrichtung, die bevorzugt in dem mobilen Endgerät integriert ist, ausreichend. Bevorzugt ist innerhalb der Endgeräteanwendung auch Code enthalten, der die Auswertung des fotografisch erfassten Barcodes und/oder QR-Codes erlaubt. Andererseits kann das mobile Endgerät auch mit NFC- und/oder RFID-Mitteln ausgestaltet sein, um ein NTC-Tag und/oder ein RFID-Tag zu lesen.

Bei einer bevorzugten Ausführungsform umfasst das Verfahren ferner ein Übermitteln einer Request-Nachricht mittels der Endgerätanwendung an die Serveranwendung, wobei die Request-Nachricht der Serveranwendung anzeigt, dass Wartungsarbeiten am Selbstbedienungsterminal durchgeführt worden sind. Beispielsweise erhält die Endgerätanwendung nach dem Starten der Wartungsanwendung auf dem Selbstbedienungsterminal von der Serveranwendung eine Nachricht, die den Service-Techniker auffordert, mit den Wartungsarbeiten zu beginnen, also beispielsweise eine Geldkassette bei einem Selbstbedienungsterminal auszutauschen. Der Service-Techniker veranlasst die Endgerätanwendung sodann, die Request-Nachricht an die Serveranwendung zu übermitteln. Bevorzugt übermittelt die Serveranwendung erst in Antwort auf den Empfang der Request-Nachricht die Schemainformationsdaten an die Endgerätanwendung.

Bevorzugt zeigen die Schemainformationen einem Benutzer des mobilen Endgeräts, also beispielsweise einem Service-Techniker, bildlich an, welche Komponenten des Selbstbedienungsterminals mittels der Stehbilderzeugungsvorrichtung zu erfassen sind.

Ferner umfasst das Verfahren bevorzugt ein Identifizieren der gewarteten Komponente anhand der Stehbilddaten durch die Serveranwendung. Die Serveranwendung kann also ermitteln, welche Komponente beispielsweise ausgetauscht worden oder repariert worden ist. Ferner kann die Serveranwendung weitere Eigenschaften der identifizierten gewarteten Komponente ermitteln und diese in Form der Aktualisierungsdaten an die Wartungsanwendung übermitteln. Beispielsweise ermittelt die Serveranwendung Zustandsinformationen betreffend die betrachtete Komponente, wie beispielsweise Zählerinformationen, Datum eines nächsten Wartungsvorgangs, Inhaltsinformationen (z.B. Notenwerte und/oder Notenanzahlen im Falle einer Geldkassette) etc.

Um den Identifizierungsvorgang zu erleichtern weist die Komponente, die gewartet worden ist, bei einer besonders bevorzugten Ausführungsform eine zweite Kennzeichnung auf, die wie die erste Kennzeichnung bevorzugt ein zweites Signalisierungs-Tag, wie ein NFC-Tag, ein RFID-Tag, ein Barcode und/oder QR-Code umfasst. In dieser Ausführungsform sind die Schemainformationendaten also beispielsweise indikativ für eine bestimmte Anzahl von QR-Codes oder Barcodes ein bestimmten Anzahl von Komponenten des SB-Terminals durch die Stehbilderzeugungsvorrichtung des mobilen Endgeräts zu erfassen ist. Auf dem Server ist beispielsweise eine dritte Datenbank hinterlegt, der den Kennzeichnungen von Komponenten von SB-Terminals Aktualisierungsdaten zuordnet. So kann die Serveranwendung die Aktualisierungsdaten bestimmen und das SB-Terminal übermitteln.

Gemäß einem zweiten Aspekt der vorliegenden Erfindung wird die oben genannte Aufgabe gelöst durch ein System zum Warten eines Selbstbedienungsterminals mit den Merkmalen des unabhängigen Patentanspruchs 12. Das System des zweiten Aspektes der vorliegenden Erfindung teilt die Vorteile des Verfahrens des ersten Aspektes der Erfindung und hat bevorzugte Ausführungsformen, die den oben beschriebenen Ausführungsformen des erfindungsgemäßen Verfahrens entsprechen, insbesondere, wie sie durch die abhängigen Ansprüche definiert sind. Daher sei auf das Vorstehende verwiesen.

Der der Erfindung zugrunde liegende Gedanke soll nachfolgend anhand der in den Figuren dargestellten Ausführungsbeispiele näher erläutert werden. Es zeigen:
- Fig. 1: eine schematische Darstellung einer Ausführungsform des erfindungsgemäßen Systems zum Warten eines Selbstbedienungsterminal; und
- Fig. 2: eine schematische Darstellung eines Ausführungsbeispiels des erfindungsgemäßen Verfahrens zum Warten eines Selbstbedienungsterminal.

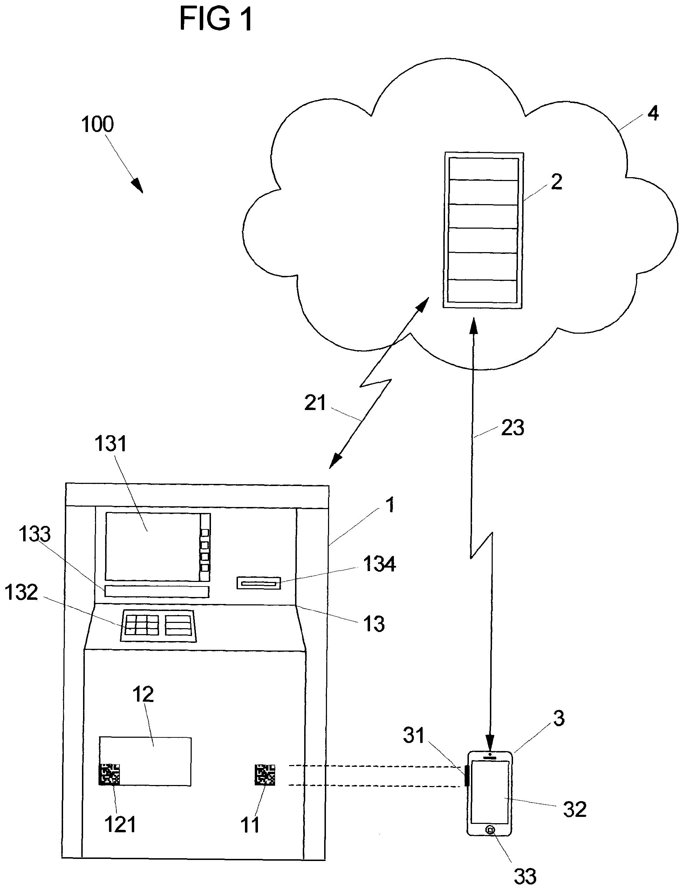

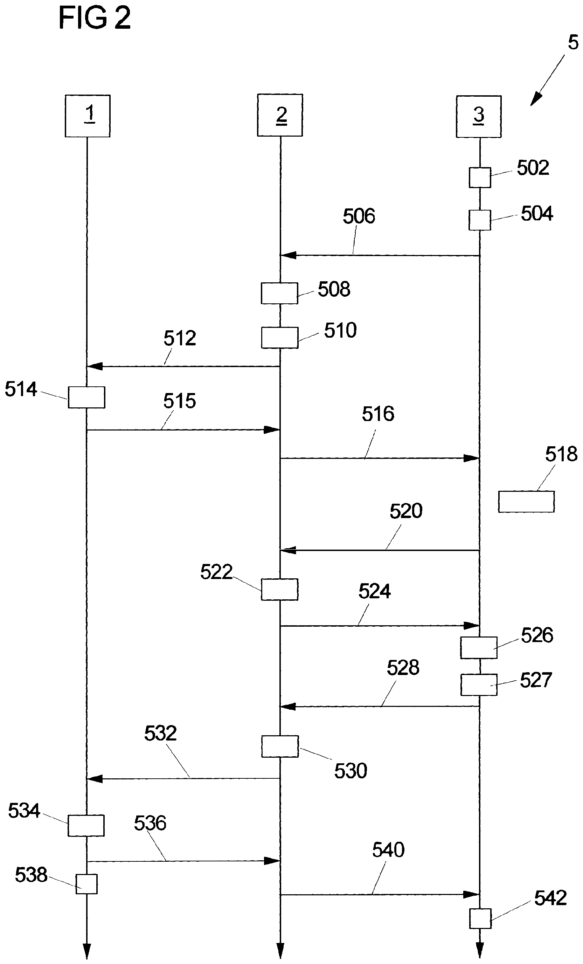

Fig. 1 zeigt eine schematische Darstellung eines Ausführungsbeispiels eines erfindungsgemäßen Systems 100 zum Warten eines Selbstbedienungsterminals 1. Fig. 2 zeigt parallel dazu in schematischer Darstellung eine Ausführungsform eines erfindungsgemäßen Verfahrens 5 zum Warten des Selbstbedienungsterminals 1.

Nachfolgend wird zunächst die grundsätzliche Konstellation mit Bezug auf die Fig. 1 beschrieben. Sodann werden das beispielhafte System 100 und das beispielhafte Verfahren 5 anhand beider Figuren erläutert.

Das System 100 zum Warten des Selbstbedienungsterminals 1 umfasst einen Server 2, der in einem Netzwerk 4 angeordnet ist. Bei dem Netzwerk 4 kann es sich um ein beliebiges Netzwerk handeln, beispielsweise dem Internet. Über eine Netzwerkverbindung 21 kann der Server 2 mit dem Selbstbedienungsterminal 1 kommunizieren. Ferner umfasst das System 100 ein mobiles Endgerät 3, beispielsweise ein Smartphone. Über eine Kommunikationsverbindung 23 kann der Server 2 mit dem mobilen Endgerät 3 kommunizieren.

Zum Warten des Selbstbedienungsterminals 1 wird auf dem Selbstbedienungsterminal eine Wartungsanwendung aufgeführt, auf dem Server 2 eine Serveranwendung sowie auf dem mobilen Endgerät 3 eine Endgerätanwendung.

Für die nachfolgenden Ausführungen sei beispielhaft angenommen, dass es sich bei dem Selbstbedienungsterminal um einen Geldautomaten handelt, der eine Geldkassette 12 umfasst, die gewartet werden muss, beispielsweise also repariert oder, wie für das folgende Beispiel angenommen wird, ausgetauscht werden muss. Bei dem Geldautomaten 1 kann es sich um einen beliebigen Geldautomaten handeln, der eine Benutzerschnittstelle 13 aufweist, die ein übliches Anzeigemittel 131, ein Eingabemittel 132, ein Geldausgabefach 133 sowie ein Kartenlesegerät 134 umfasst.

Ferner ist der Geldautomat 1 mit einer Kennzeichnung 11 versehen, für die für das folgende Beispiel angenommen wird, dass es sich um einen QR-Code handelt. Wie oben erläutert worden ist, kann es sich bei der Kennzeichnung 11 auch um eine Kennzeichnung eines anderen Typs handeln. Die zu auszutauschende Geldkassette 12 ist mit einer zweiten Kennzeichnung 121 versehen. Auch bei der zweiten Kennzeichnung 121kann es sich um einen QR-Code handeln.

Das mobile Endgerät 3 (nachfolgend auch als 'Endgerät' bezeichnet) ist beispielsweise ein Smartphone. Das Endgerät 3 weist eine Stehbilderzeugungsvorrichtung 31 auf, also beispielsweise eine Kameraeinheit oder einen Scanner. Ferner umfasst das mobile Endgerät 3 ein Anzeigemittel 32, wie beispielsweise einen berührungssensitiven Bildschirm, über den ein Nutzer des Endgeräts 3 Eingaben tätigen kann. Darüber hinaus verfügt das Endgerät 3 über eine oder mehrere Bedientasten 33. Das Endgerät 3 ist ausgebildet, die Kommunikationsverbindung 23 mit dem Server herzustellen. Diese Kommunikationsverbindung 23 wird beispielsweise über ein zellulares Mobilfunknetz hergestellt.

Somit besteht einerseits eine Netzwerkverbindung 21, mittels der der Server 2 mit dem Geldautomaten 1 kommunizieren kann, und andererseits die Kommunikationsverbindung 23, über die die Kommunikation zwischen dem Endgerät 3 und dem Server 2 erfolgt. Indes ist eine Kommunikationsverbindung zwischen dem Geldautomaten 1 und dem Endgerät 3 nicht vorgesehen. Weder muss also der Geldautomat 1 noch das Endgerät 3 Mittel für eine Kommunikation zwischen dem Geldautomaten 1 und dem Endgerät 3 aufweisen. Es ist lediglich erforderlich, dass die die Stehbilderzeugungsvorrichtung 31 Stehbilder von der Kennzeichnungen 11 und 121 erzeugen kann.

Nachfolgend wird mit Bezug auf die Fig. 1 und die Fig. 2 ein Wartungsvorgang am Geldautomaten 1 erläutert. Dabei zeigt die Fig. 2 schematisch den Geldautomaten 1, den Server 2 und das Endgerät 3 als jeweilige Box. Für jede dieser Einheiten ist eine vertikale Zeitachse vorgesehen. Mit Bezug auf diese Zeitachsen soll nun der zeitliche Ablauf des Wartungsverfahrens 5 sowie die Funktionsweise des Wartungssystems 1 beschrieben werden.

In Schritt 502 wird die Endgerätanwendung auf dem Endgerät 3 gestartet, beispielsweise durch einen Service-Techniker, der sich mit dem Endgerät 3 in dem Nahbereich des Geldautomaten 1 befindet. Sodann, in Schritt 504, erfasst das Endgerät 3 die Kennzeichnung 11, also den QR-Code 11 des Geldautomaten 1 mittels der Stehbilderzeugungsvorrichtung 31. Dies ist in der Fig. 1 schematisch durch die gestrichelten Linien gekennzeichnet.

Das Endgerät 3 sendet bei Schritt 506 Kennzeichnungsdaten, die das Endgerät 3 in Abhängigkeit des Stehbilds erzeugt hat, an den Server 2. Auf Empfang dieser Kennzeichnungsdaten hin wird auf dem Server 2 eine Serveranwendung ausgeführt (Schritt 508). Alternativ ist es möglich, dass das Ausführen der Serveranwendung kontinuierlich erfolgt, also insbesondere auch vor dem Empfang der Kennzeichnungsdaten.

Bei Schritt 510 identifiziert die Serveranwendung basierend auf den Kennzeichnungsdaten den zu wartenden Geldautomaten 1. Das Identifizieren beinhaltet beispielsweise das Ermitteln einer Netzwerkadresse des Geldautomaten 1 unter Verwendung einer auf dem Server 2 hinterlegten Datenbank. Danach, bei Schritt 512, überträgt der Server 2 ein Startsignal an den Geldautomaten 1. Dadurch wird das Ausführen einer Wartungsanwendung auf dem Geldautomaten 1 initiiert (Schritt 514). Nachdem die Wartungsanwendung auf dem Geldautomaten 1 angelaufen ist, bestätigt der Geldautomat 1 das ordnungsgemäße Ausführen der Wartungsanwendung an den Server 2 (Schritt 515).

Daraufhin überträgt der Server 2, in Schritt 516, eine Nachricht an das Endgerät 3. Diese Nachricht wird von der Endgerätanwendung auf dem Anzeigemittel 32 angezeigt und dem Service-Techniker wird dadurch mitgeteilt, dass die Wartungsarbeiten, sprich der Austausch der Geldkassette 12, beginnen kann. Während des Schritts 518 werden also die manuellen Wartungsarbeiten an dem Geldautomaten 1 durchgeführt.

Nachdem die Wartungsarbeiten abgeschlossen sind, also die Geldkassette 12 ausgetauscht worden ist, teilt die Endgeräteanwendung, beispielsweise auf eine entsprechende Benutzereingabe hin, dem Server durch eine Nachricht mit, dass die Wartungsarbeiten abgeschlossen sind (Schritt 520).

In Schritt 522 bestimmt die Serveranwendung Schemainformationsdaten in Abhängigkeit der Kennzeichnungsdaten, also in Abhängigkeit der Identifikation des Geldautomaten, und übermittelt den Schritt 524 Schemainformationsdaten an das Endgerät über die Kommunikationsverbindung 23. Das Ermitteln des Schemainformationsdaten erfolgt beispielsweise unter Verwendung einer zweiten Datenbank, die den Kennzeichnungsdaten Schemainformationsdaten zuordnet. Die Schemainformationsdaten sind indikativ für den zweiten QR-Code 121 der Geldkassette 12, der Stehbilderzeugungsvorrichtung 31 des Endgeräts 3 zu erfassen ist.

Bei Schritt 526 werden auf dem Anzeigemittel 32 des Endgeräts 3 basierend auf den Schemainformationsdaten Schemainformationen angezeigt. Diese Schemainformationen teilen dem Service-Techniker mit, ein Stehbild des zweiten QR-Codes 121 der ausgetauschten Geldkassette 12 zu erzeugen. In folgendem Schritt 527 erfolgt das Erzeugen wenigstens eines Stehbildes durch die Stehbilderzeugungsvorrichtung 31.

Dieses Stehbild bzw. Daten, die indikativ für dieses Stehbild sind, werden bei Schritt 528 von dem Endgerät 3 an den Server 2 übermittelt. Dadurch kann der Server 2 bei Schritt 530 die ausgetauschte Geldkassette 12 identifizieren und in Abhängigkeit davon Aktualisierungsdaten bestimmen. Das Bestimmen der Aktualisierungsdaten erfolgt beispielsweise unter Verwendung einer dritten Datenbank, die den Kennzeichnungen von Komponenten von SB-Terminals Aktualisierungsdaten zuordnet.

Bei Schritt 532 übermittelt der Server 2 diese Aktualisierungsdaten an die Wartungsanwendung, die auf dem Geldautomaten 1 ausgeführt wird. Diese Aktualisierungsdaten umfassen beispielsweise Informationen über einen Zählerstand der ausgetauschten Geldkassette 12 und/oder Informationen über einen Termin, an dem ein nächster Austausch erfolgen soll, und dergleichen.

In Abhängigkeit der Aktualisierungsdaten setzt die Wartungsanwendung bei Schritt 534 beispielsweise Zählerinformationen um und benachrichtigt danach, bei Schritt 536, die Serveranwendung über diesen Vorgang. Bei Schritt 538 wird die Wartungsanwendung beendet. Der Server 2 teilt dem mobilen Endgerät bei Schritt 540 mit, dass der Wartungsvorgang abgeschlossen worden ist, so dass die Endgerätanwendung bei Schritt 542 beendet werden kann.

Die vorliegende Erfindung ist jedoch nicht auf den Austausch von Geldkassetten bei Geldautomaten beschränkt. Vielmehr können Selbstbedienungsterminal jeglicher Art durch das erfindungsgemäße System und das erfindungsgemäße Verfahren vorteilhaft gewartet werden. Dadurch, dass der Wartungsvorgang zentral durch den Server 2 koordiniert werden kann, kann auf intelligente Komponenten in dem Selbstbedienungsterminal, die ausgebildet sind, mit einem mobilen Endgerät zu kommunizieren, verzichtet werden. Wie die schematische Darstellung in Fig. 2 zeigt, findet keine direkte Kommunikation zwischen dem mobilen Endgerät 3 und dem Selbstbedienungsterminal 1 statt. Dadurch kann die Wartung des Selbstbedienungsterminals zuverlässiger und kostengünstiger erfolgen.

### Bezugszeichenliste

- 100: System zum Warten eines Selbstbedienungsterminals
- 1: Selbstbedienungsterminal
- 11: Kennzeichnung
- 12: Geldkassette
- 121: Zweite Kennzeichnung
- 13: Benutzerschnittstelle
- 131: Bildschirm
- 132: Eingabemittel
- 133: Geldausgabefach
- 134: Kartenlesegerät
- 2: Server
- 21: Netzwerkverbindung
- 23: Kommunikationsverbindung
- 3: Mobiles Endgerät
- 31: Stehbilderzeugungsvorrichtung
- 32: Anzeigemittel
- 33: Bedientaste
- 4: Netzwerk
- 5: Verfahren zum Warten eines Selbstbedienungsterminals
- 502-542: Schritte des Verfahrens 5

## Patentansprüche

1. Verfahren (5) zum Warten eines Selbstbedienungsterminals (1), umfassend die Schritte
- Ausführen einer Serveranwendung auf einem Server (2) eines Netzwerks (4), um eine Anzahl von Selbstbedienungsterminals zu verwalten;
- Positionieren eines mobilen Endgeräts (3) in einem Nahbereich des Selbstbedienungsterminals (1) und Ausführen einer Endgerätanwendung auf dem mobilen Endgerät (3);
- Erfassen einer Kennzeichnung (11) des Selbstbedienungsterminals (1) und Erzeugen von Kennzeichnungsdaten;
- Herstellen einer Kommunikationsverbindung (23) zwischen dem Server (2) und dem mobilen Endgerät (3);
- Übermitteln der Kennzeichnungsdaten an die Serveranwendung;
- Identifizieren des zu wartenden Selbstbedienungsterminals (1) anhand der Kennzeichnungsdaten durch die Serveranwendung;
**gekennzeichnet durch:**
- Ansprechen des zu wartenden Selbstbedienungsterminals (1) über das Netzwerk (4) durch den Server (2) und Aufbauen einer Netzwerkverbindung (21) zwischen dem Selbstbedienungsterminal (1) und dem Server (2);
- Initiieren eines Ausführens einer Wartungsanwendung auf dem Selbstbedienungsterminal (1) durch die Serveranwendung;
- Bestimmen von Schemainformationsdaten in Abhängigkeit der Kennzeichnungsdaten und Übermitteln der bestimmten Schemainformationsdaten mittels der Serveranwendung an die Endgerätanwendung über die Kommunikationsverbindung (23), wobei die Schemainformationsdaten indikativ für eine Komponente (12) des Selbstbedienungsterminals (1) sind, die wenigstens teilweise durch eine Stehbilderzeugungsvorrichtung (31) des mobilen Endgeräts (3) zu erfassen ist;
- basierend auf den Schemainformationsdaten: Anzeigen von Schemainformationen auf einem Anzeigemittel (32) des mobilen Endgeräts (3);
- mittels des mobilen Endgeräts (3): Erfassen eines Stehbildes von der Komponente (12) unter Verwendung der Schemainformationen und Übermitteln von Stehbilddaten, die indikativ für das Stehbild sind, an die Serveranwendung; und
- Bestimmen von Aktualisierungsdaten in Abhängigkeit der Stehbilddaten durch die Serveranwendung und Übermitteln der Aktualisierungsdaten an die Wartungsanwendung;
wobei die auf dem Server (2) ausgeführte Serveranwendung sowohl die Wartungsanwendung auf dem Selbstbedienungsterminal (1) als auch die Endgerätanwendung auf dem mobilen Endgerät (3) steuert, ohne dabei auf eine direkte Kommunikation zwischen dem Selbstbedienungsterminal (1) und dem mobilen Endgerät (3) zurückzugreifen.

2. Verfahren nach Anspruch 1, **dadurch gekennzeichnet, dass** das Erfassen der Kennzeichnung (11) und das Übermitteln der Kennzeichnungsdaten durch das mobile Endgerät (3) erfolgt.

3. Verfahren nach einem der vorstehenden Ansprüche, **dadurch gekennzeichnet, dass** die Kennzeichnung (11) des Selbstbedienungsterminals (1) ein Signalisierungs-Tag, wie ein NFC-Tag, ein RFID-Tag, einen Barcode und/oder einen QR-Code umfasst.

4. Verfahren nach einem der vorstehenden Ansprüche, **dadurch gekennzeichnet, dass** das Erfassen der Kennzeichnung (11) mittels der Stehbilderzeugungsvorrichtung (31) des mobilen Endgeräts erfolgt.

5. Verfahren nach einem der vorstehenden Ansprüche, **dadurch gekennzeichnet, dass** die Kommunikationsverbindung (23) über ein zellulares Mobilfunknetz, wie ein WLAN-, GSM-, GPRS-, 2GPP-, 3GPP- und/oder LTE-Netz hergestellt wird.

6. Verfahren nach einem der vorstehenden Ansprüche, **gekennzeichnet durch** ein Übermitteln einer Request-Nachricht mittels der Endgerätanwendung an die Serveranwendung, wobei die Request-Nachricht der Serveranwendung anzeigt, dass Wartungsarbeiten am Selbstbedienungsterminal durchgeführt worden sind.

7. Verfahren nach Anspruch 6, **dadurch gekennzeichnet, dass** die Serveranwendung erst in Antwort auf den Empfang der Request-Nachricht die Schemainformationsdaten an die Endgerätanwendung übermittelt.

8. Verfahren nach einem der vorstehenden Ansprüche, **dadurch gekennzeichnet, dass** die Schemainformationen einem Nutzer des mobilen Endgeräts (3) bildlich anzeigen, welche Komponenten des Selbstbedienungsterminals (1) mittels der Stehbilderzeugungsvorrichtung zu erfassen sind.

9. Verfahren nach einem der vorstehenden Ansprüche, **gekennzeichnet durch** ein Identifizieren der Komponente (12) anhand der Stehbilddaten durch die Serveranwendung.

10. Verfahren nach einem der vorstehenden Ansprüche, **dadurch gekennzeichnet, dass** die Komponente (12) eine zweite Kennzeichnung (121) aufweist, die ein zweites Signalisierungs-Tag, wie ein NFC-Tag, ein RFID-Tag, einen Barcode und/oder einen QR-Code, umfasst.

11. System (100) zum Warten eines Selbstbedienungsterminals (1), aufweisend
- einen Server (2) eines Netzwerks (4), der zum Ausführen einer Serveranwendung ausgebildet ist, um eine Anzahl von Selbstbedienungsterminals zu verwalten;
- ein mobiles Endgeräts (3), das für ein Positionieren in einem Nahbereich des Selbstbedienungsterminals (1) und zum Ausführen einer Endgerätanwendung ausgebildet ist; wobei das mobile Endgerät (3) ferner ausgebildet ist zum
- Erfassen einer Kennzeichnung (11) des Selbstbedienungsterminals (1) und Erzeugen von Kennzeichnungsdaten;
- Herstellen einer Kommunikationsverbindung (23) zwischen dem Server (2) und dem mobilen Endgerät (3); und
- Übermitteln der Kennzeichnungsdaten an die Serveranwendung;
wobei der Server (2) ausgebildet ist zum Identifizieren des zu wartenden Selbstbedienungsterminals (1) anhand der Kennzeichnungsdaten durch die Serveranwendung;
**dadurch gekennzeichnet, dass**
- der Server (2) weiter ausgebildet ist zum
- Ansprechen des zu wartenden Selbstbedienungsterminals (1) über das Netzwerk (4) und Aufbauen einer Netzwerkverbindung (21) mit dem Selbstbedienungsterminal (1);
- Initiieren eines Ausführens einer Wartungsanwendung auf dem Selbstbedienungsterminal (1) durch die Serveranwendung;
- Steuern sowohl der Wartungsanwendung auf dem Selbstbedienungsterminal (1) als auch der Endgerätanwendung auf dem mobilen Endgerät (3) mittels der Serveranwendung, ohne dabei auf eine direkte Kommunikation zwischen dem Selbstbedienungsterminal (1) und dem mobilen Endgerät (3) zurückzugreifen; und
- Bestimmen von Schemainformationsdaten in Abhängigkeit der Kennzeichnungsdaten und Übermitteln der bestimmten Schemainformationsdaten mittels der Serveranwendung an die Endgerätanwendung über die Kommunikationsverbindung (23), wobei die Schemainformationsdaten indikativ für eine Komponente (12) des Selbstbedienungsterminals (1) sind, die wenigstens teilweise durch eine Stehbilderzeugungsvorrichtung (31) des mobilen Endgeräts (3) zu erfassen ist; und dass
- das mobile Endgerät (3) weiter ausgebildet ist zum
- Anzeigen, basierend auf den Schemainformationsdaten, von Schemainformationen auf einem Anzeigemittel (32) des mobilen Endgeräts (3); und zum
- Erfassen eines Stehbildes von der Komponente (12) unter Verwendung der Schemainformationen und Übermitteln von Stehbilddaten, die indikativ für das Stehbild sind, an die Serveranwendung; und wobei
- der Server (2) weiter ausgebildet ist zum Bestimmen von Aktualisierungsdaten in Abhängigkeit der Stehbilddaten durch die Serveranwendung und zum Übermitteln der Aktualisierungsdaten an die Wartungsanwendung.

## Claims

1. Method (5) for servicing a self-service terminal (1), comprising the steps of
- executing a server application on a server (2) of a network (4) in order to manage a number of self-service terminals;
- positioning a mobile terminal (3) in close range of the self-service terminal (1) and executing a terminal application of the mobile terminal (3);
- capturing an identifier (11) of the self-service terminal (1) and generating identifier data;
- making a communication connection (23) between the server (2) and the mobile terminal (3);
- transmitting the identifier data to the server application;
- identifying the self-service terminal (1) to be serviced on the basis of the identifier data by means of the server application;
**characterized by:**
- addressing the self-service terminal (1) to be serviced via the network (4) by means of the server (2) and setting up a network connection (21) between the self-service terminal (1) and the server (2);
- initiating execution of a servicing application on the self-service terminal (1) by means of the server application;
- determining scheme information data on the basis of the identifier data and transmitting the determined scheme information data to the terminal application via the communication connection (23) by using the server application, wherein the scheme information data are indicative of a component (12) of the self-service terminal (1) that needs to be captured at least in part by a still-image generating apparatus (31) of the mobile terminal (3);
- taking the scheme information data as a basis for: displaying scheme information on the display means (32) of the mobile terminal (3);
- using the mobile terminal (3) to: capture a still image of the component (12) by using the scheme information and transmit still-image data indicative of the still image to the server application; and
- determining update data on the basis of the still-image data by means of the server application and transmitting the update data to the servicing application;
wherein the server application executed on the server(2) controls both the servicing application on the self-service terminal (1) and the terminal application on the mobile terminal (3) without resorting to a direct communication between the self-service terminal (1) and the mobile terminal (3) .

2. Method according to Claim 1, **characterized in that** the capturing of the identifier (11) and the transmitting of the identifier data are effected by the mobile terminal (3).

3. Method according to either of the preceding claims, **characterized in that** the identifier (11) of the self-service terminal (1) comprises a signalling tag, such as a NFC tag, a RFID tag, a barcode and/or a QR code.

4. Method according to one of the preceding claims, **characterized in that** the capturing of the identifier (11) is effected by using the still-image generating apparatus (31) of the mobile terminal.

5. Method according to one of the preceding claims, **characterized in that** the communication connection (23) is made via a cellular mobile radio network, such as a WLAN, GSM, GPRS, 2GPP, 3GPP and/or LTE network.

6. Method according to one of the preceding claims, **characterized by** transmitting a request message to the server application by using the terminal application, wherein the request message indicates to the server application that servicing work has been performed on the self-service terminal.

7. Method according to Claim 6, **characterized in that** the server application transmits the scheme information data to the terminal application only in response to receipt of the request message.

8. Method according to one of the preceding claims, **characterized in that** the scheme information graphically indicates to a user of the mobile terminal (3) which components of the self-service terminal (1) need to be captured by using the still-image generating apparatus.

9. Method according to one of the preceding claims, **characterized by** identifying the component (12) on the basis of the still-image data by means of the server application.

10. Method according to one of the preceding claims, **characterized in that** the component (12) has a second identifier (121), which comprises a second signalling tag, such as a NFC tag, a RFID tag, a barcode and/or a QR code.

11. System (100) for servicing a self-service terminal (1), having
- a server (2) of a network (4), which server is designed to execute a server application in order to manage a number of self-service terminals;
- a mobile terminal (3), designed for positioning in close range of the self-service terminal (1) and for executing a terminal application; wherein the mobile terminal (3) is further designed to
- capture an identifier (11) of the self-service terminal (1) and generate identifier data;
- make a communication connection (23) between the server (2) and the mobile terminal (3); and
- transmit the identifier data to the server application;
wherein the server (2) is designed to identify the self-service terminal (1) to be serviced on the basis of the identifier data by means of a server application;
**characterized in that**
- the server (2) is further designed to
- address the self-service terminal (1) to be serviced via the network (4) and set up a network connection (21) to the self-service terminal (1);
- initiate execution of a servicing application on the self-service terminal (1) by means of the server application;
- control both the servicing application on the self-service terminal (1) and the terminal application on the mobile terminal (3) by using the server application without resorting to a direct communication between the self-service terminal (1) and the mobile terminal (3); and
- determine scheme information data on the basis of the identifier data and transmit the determined scheme information data to the terminal application via the communication connection (23) by using the server application, wherein the scheme information data are indicative of a component (12) of the self-service terminal (1) that needs to be captured at least in part by a still-image generating apparatus (31) of the mobile terminal (3); and **in that**
- the mobile terminal (3) is further designed to
- display, on the basis of the scheme information data, scheme information on a display means (32) of the mobile terminal (3); and to
- capture a still image of the component (12) by using the scheme information and transmit still-image data indicative of the still image to the server application; and wherein
- the server (2) is further designed to determine update data on the basis of the still-image data by means of the server application and to transmit the update data to the servicing application.

## Revendications

1. Procédé (5) de maintenance d'un terminal en libre-service (1), comprenant les étapes suivantes :
- exécution d'une application de serveur sur un serveur (2) d'un réseau (4) pour gérer un certain nombre de terminaux en libre-service ;
- positionnement d'un appareil terminal mobile (3) à une proximité du terminal en libre-service (1) et exécution d'une application d'appareil terminal sur l'appareil terminal mobile (3) ;
- enregistrement d'un marquage (11) du terminal en libre-service (1) et génération de données d'identification ;
- établissement d'une liaison de communication (23) entre le serveur (2) et l'appareil terminal mobile (3) ;
- transmission des données d'identification à l'application de serveur ;
- identification du terminal en libre-service à entretenir (1) à partir des données d'identification par l'application de serveur ;
**caractérisé par** :
- la sollicitation du terminal en libre-service (1) à entretenir par l'intermédiaire du réseau (4) par le serveur (2) et la mise en place d'une liaison de réseau (21) entre le terminal en libre-service (1) et le serveur (2) ;
- l'initiation d'une exécution d'une application de maintenance sur le terminal en libre-service (1) par l'application de serveur ;
- la détermination de données d'informations schématiques en fonction des données d'identification et la transmission des données d'informations schématiques définies au moyen de l'application de serveur à l'application d'appareil terminal par l'intermédiaire de la liaison de communication (23), les données d'informations schématiques étant indicatives d'un composant (12) du terminal en libre-service (1) qui doit être enregistré au moins partiellement par un dispositif de génération d'images fixes (31) de l'appareil terminal mobile (3) ;
- en se basant sur les données d'informations schématiques, l'affichage d'informations schématiques sur un moyen d'affichage (32) de l'appareil terminal mobile (3) ;
- au moyen de l'appareil terminal mobile (3) : l'enregistrement d'une image fixe du composant (12) en utilisant les informations schématiques et la transmission de données d'image fixe, qui sont indicatives de l'image fixe, à l'application de serveur ; et
- la détermination de données d'actualisation en fonction des données d'image fixe par l'application de serveur et la transmission des données d'actualisation à l'application de maintenance ;
l'application de serveur exécutée sur le serveur (2) commandant aussi bien l'application de maintenance sur le terminal en libre-service (1) que l'application d'appareil terminal sur l'appareil terminal mobile (3) sans recourir à une communication directe entre le terminal en libre-service (1) et l'appareil terminal mobile (3).

2. Procédé selon la revendication 1, **caractérisé en ce que** l'enregistrement du marquage (11) et la transmission des données d'identification sont effectués par l'appareil terminal mobile (3).

3. Procédé selon une des revendications précédentes, **caractérisé en ce que** le marquage (11) du terminal en libre-service (1) comprend une marque de signalisation, comme une marque NFC, une marque RFID, un code barre et/ou un code QR.

4. Procédé selon une des revendications précédentes, **caractérisé en ce que** l'enregistrement du marquage (11) est effectué au moyen du dispositif de génération d'images fixes (31) de l'appareil terminal mobile.

5. Procédé selon une des revendications précédentes, **caractérisé en ce que** la liaison de communication (23) est établie par un réseau radio mobile cellulaire, comme un réseau WLAN, GSM, GPRS, 2GPP, 3GPP et/ou LTE.

6. Procédé selon une des revendications précédentes, **caractérisé par** une transmission d'un message de requête au moyen de l'application d'appareil terminal à l'application de serveur, le message de requête indiquant à l'application que des travaux de maintenance ont été réalisés sur le terminal en libre-service.

7. Procédé selon la revendication 6, **caractérisé en ce que** l'application de serveur ne transmet les données d'informations schématiques à l'application d'appareil terminal qu'en réponse à la réception du message de requête.

8. Procédé selon une des revendications précédentes, **caractérisé en ce que** les informations schématiques indiquant graphiquement à un utilisateur de l'appareil terminal mobile (3) quels composants du terminal en libre-service (1) doivent être enregistrés au moyen du dispositif de génération d'images fixes.

9. Procédé selon une des revendications précédentes, **caractérisé par** une identification du composant (12) à partir des données d'image fixe par l'application de serveur.

10. Procédé selon une des revendications précédentes, **caractérisé en ce que** le composant (12) présente un second marquage (121), qui comprend une seconde marque de signalisation, comme une marque NFC, une marque RFID, un code barre et/ou un code QR.

11. Système (100) de maintenance d'un terminal en libre-service (1), présentant
- un serveur (2) d'un réseau (4), qui est conçu pour exécuter une application de serveur pour gérer un certain nombre de terminaux en libre-service ;
- un appareil terminal mobile (3) qui est conçu pour un positionnement à une proximité du terminal en libre-service (1) et pour exécuter une application d'appareil terminal, l'appareil terminal mobile (3) étant en outre conçu pour
- enregistrer un marquage (11) du terminal en libre-service (1) et générer des données d'identification ;
- établir une liaison de communication (23) entre le serveur (2) et l'appareil terminal mobile (3) ;
- transmettre des données d'identification à l'application de serveur ;
le serveur (2) étant conçu pour identifier le terminal en libre-service à entretenir (1) à partir des données d'identification par l'application de serveur ;
**caractérisé en ce que**
- Le serveur (2) est en outre conçu pour
- solliciter le terminal en libre-service (1) à entretenir par l'intermédiaire du réseau (4) et mettre en place une liaison de réseau (21) avec le terminal en libre-service (1) ;
- initier une exécution d'une application de maintenance sur le terminal en libre-service (1) par l'application de serveur ;
- commander aussi bien l'application de maintenance sur le terminal en libre-service (1) que l'application d'appareil terminal sur l'appareil terminal mobile (3) au moyen d'une application de serveur sans recourir à une communication directe entre le terminal en libre-service (1) et l'appareil terminal mobile (3) ; et
- déterminer des données d'informations schématiques en fonction des données d'identification et transmettre les données d'informations schématiques définies au moyen de l'application de serveur à l'application d'appareil terminal par l'intermédiaire de la liaison de communication (23), les données d'informations schématiques étant indicatives d'un composant (12) du terminal en libre-service (1) qui doit être enregistré au moins partiellement par un dispositif de génération d'images fixes (31) de l'appareil terminal mobile (3) ; et **en ce que**
- l'appareil terminal mobile (3) est en outre conçu pour
- en se basant sur les données d'informations schématiques, afficher des informations schématiques sur un moyen d'affichage (32) de l'appareil terminal mobile (3); et pour
- enregistrer une image fixe du composant (12) en utilisant les informations schématiques et transmettre des données d'image fixe, qui sont indicatives de l'image fixe, à l'application de serveur ; et
- le serveur (2) étant en outre conçu pour déterminer des données d'actualisation en fonction des données d'image fixe par l'application de serveur et pour transmettre les données d'actualisation à l'application de maintenance.
